# EUROPEAN PATENT APPLICATION

(11) **EP 1 053 859 A1**
(43) Date of publication of application: **22.11.2000**
(21) Application number: 00102745.7
(22) Date of filing: 10.02.2000
(51) Int. Cl.: B29C 49/60, B29C 49/00

(54) **A method for the production of hollow articles of thermoplastic material using two sheets and helping means to pierce one sheet to blow mould the article**

(30) Priority: 21.05.1999 IT TO990429
(71) Applicant: CRS Srl Centro Ricerche e Sperimentazioni, 10060 Frossasco (IT)
(72) Inventor: Ravera, Giorgio, 10066 Torre Pellice (IT)
(74) Representative: Marchitelli, Mauro

(57) **Abstract**

A method for producing hollow articles of thermoplastic material, comprising the steps of:
- placing a first sheet of thermoplastic material (12), heated at a plasticizing temperature, between two dies (18, 38) which define at least one cavity (20),
- placing a second heated sheet of thermoplastic material (14) above the first sheet (12), and
- closing the dies (18, 38) and injecting a jet of pressurised fluid for forming at least one cavity (16) between said sheets (12, 14).

One of the said dies (18) has at least one needle (22) connected to a source of pressurised fluid and placed in correspondence with said cavity (20). After the deposition of the first sheet (12) a pressure is applied on the portion of the sheet placed in correspondence with said needle (22) so as to produce the perforation of the sheet (12) by said needle (22).

## Description

The present invention relates to a method for the production of hollow articles of thermoplastic material.

More precisely, the invention relates to a method of the type summarily defined in the preamble of claim 1, which is known from EP-A-0514616. This document discloses a method for the production of hollow articles formed by two sheets of thermoplastic material, intended in particular to be used for internal fittings for vehicles. For the purpose of producing a hollow article during a single moulding operation, this document provides for injecting pressurised fluid between the two heated sheets which are closed between two dies of a thermo-compression moulding equipment. The two dies have cavities in correspondence of which the sheets are blow-moulded by the pressurised fluid.

In the known method, the pressurised fluid is injected by means of a nozzle which is placed between the two sheets. In this manner, a trough aperture is formed on the perimeter the finished component. In many cases, such aperture is not acceptable for esthetical reasons in that it creates a discontinuity on the perimeter of the component. In some cases a plug of elastomeric or plastic material is used for closing such aperture. However, also in this case there is discontinuity from the aesthetical point of view and an additional cost due to the production and fitting of the plug in the aperture.

For the purpose of overcoming the above drawbacks, the subject of the present invention is a method having the features contained in the main claim.

The present invention will now be disclosed in detail, with reference to the annexed drawings, given purely way of non-limiting example, in which:
- figures 1 and 2 are schematic views showing two steps of a method according to the invention,
- figure 3 is a cross-section taken along the line III-III of figure 1,
- figure 4 is a cross-section in greater scale of the part indicated by the arrow IV in figure 2,
- figure 5 is a schematic cross-section showing the final step of the moulding method according to the invention,
- figure 6 is a schematic perspective view of a finished component, taken along the arrow VI of figure 5, and
- figure 7 is a schematic cross-section similar to figure 4, showing a variant of the equipment used in the method according to the invention.

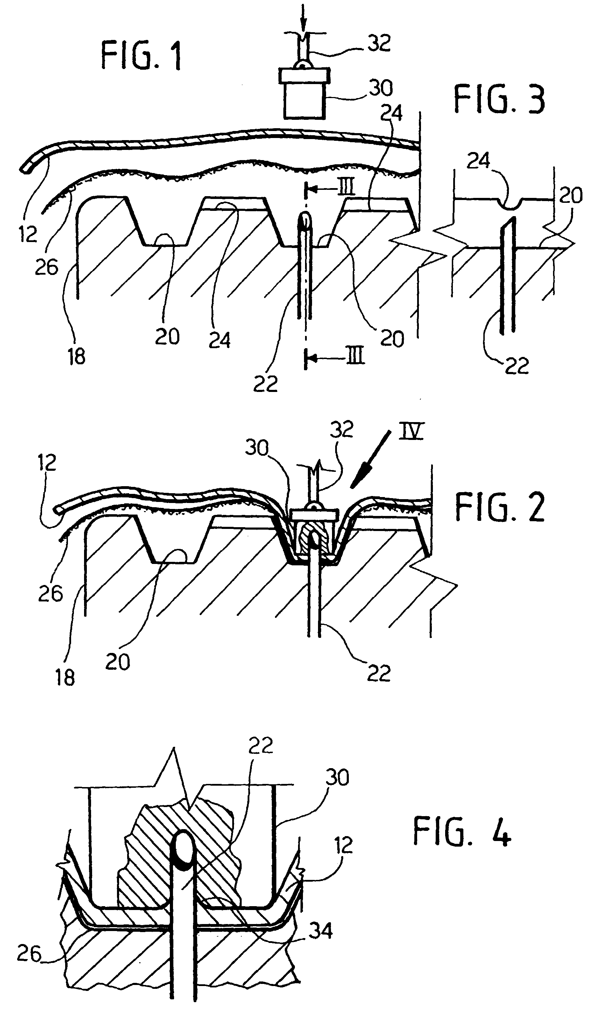

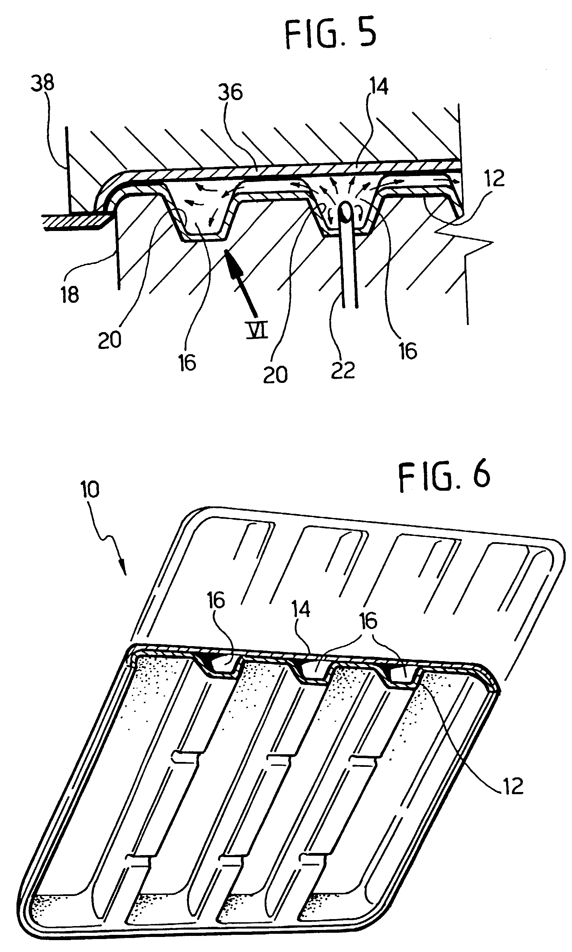

With reference initially to figure 5, the numeral reference 10 indicates an article of thermoplastic material formed by two sheets 12, 14 jointed to each other during a single moulding operation. Both sheets 12, 14 can be provided on their visible surfaces with an aesthetic coating of fabric, plastic material or the like. The component 10 has a plurality of cavities 16 which are formed as it will be disclosed in the following by injecting pressurised fluid during the moulding operation. With reference to figures 1 to 4, the numeral reference 18 indicates the lower die of a thermo-compression moulding equipment. The die 18 has a plurality of cavities 20 with a profile corresponding to that of the hollow portions 16 which are intended to be formed on the finished component 10. In at least one of said cavities there is placed a needle 22 connected to a source of pressurised fluid, for instance air. The needle 22 is in a fixed position with respect to the lower die 18 and projects into the cavity 20 of a quantity which is less than the depth thereof. The various cavities 20 provided in the die 18 can be connected to each other by channels 24 for enabling the fluid supplied by the needle 22 to reach all the cavities. As an alternative, a plurality of needles 22 could be provided, placed in correspondence with respective cavities. A layer of coating material 26 and a first sheet 12 of thermoplastic material previously heated at a plasticizing temperature are placed on the die 18.

Then, as shown in figure 2, a pressure is applied on the portion of the sheet 12 which is placed in correspondence with the needle 12. In the example shown in the figures, the pressure is applied by means of a plug 30 of soft material and which is not compatible with the material of the sheet 12. The plug 20 is moved by an arm 32 carried by a mechanism (not shown) placed outside the moulding equipment. As shown in figure 2, the fabric 26, the sheet 28 and the plug 30 are perforated by the needle 22. Then, the plug is raised and brought outside of the moulding zone. After the plug 30 has been raised, the sheet 38 remains ancored on the needle 22. As shown in figure 4, the application of pressure on the sheet 12 by means of the plug 30 forms a raised collar 34 which adheres to the outer surface of the needle 22, forming a substantially fluid-tight zone.

With reference to figure 5, after having perforated as disclosed above the sheet 12 and, if present, the coating material 26, a second heated sheet of thermoplastic material 14 is placed above the first sheet 12 and the second die 18 is brought in the closed position. At the same time, a jet of compressed air with high pressure is injected through the needle 22 for obtaining the formation of the cavities 16 as disclose in detail in EP-A-0514616.

Experiments carried out by the applicant have shown that it is very difficult to obtain the perforation of a heated thermoplastic sheet with a thickness of some millimetres by a needle having a diameter of some millimetres. Without an opposing pressure applied by means of a soft plug or the like, the sheet could be raised by the needle and there would not be a guarantee of the fact that the perforation has been carried out in a proper way. On the contrary, the use of a contrast element which pushes the sheet against the needle permits to obtain a guarantee of a perforation for each moulding cycle. Instead of a soft plug which is perforated by the needle during each moulding cycle, an element with an annular shape can be used, intended to apply a pressure on the zone of the sheet to be perforated placed in close proximity to the needle 22. It is preferable that the material forming the pressure element intended to act on the sheet is made of material which is not compatible with that of the sheet, for preventing that it adheres to the sheet and tends to move the sheet way from the needle 22 during its raising movement. As an alternative, an element of compatible material could be used, which remains glued to the sheet and which is substituted in each moulding cycle.

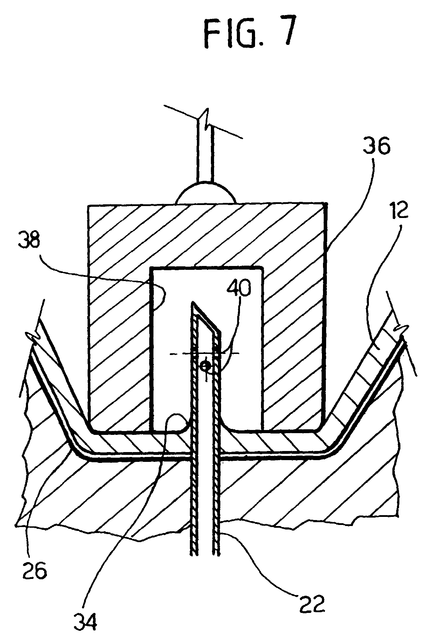

In the variant of figure 7, the plug 30 has been replaced by a rigid body 36, for instance of metal, having a cavity 38. In this variant, the upper end of the needle 22 is closed and is provided with holes 40 formed in the lateral wall of the needle for supplying the air flow. Preferably, the differences between the diameter of the cavity 38 and diameter of the needle 22 is equal to or higher than the double of the thickness of the sheet 12.

## Claims

1. A method for producing hollow articles of thermoplastic material, comprising the steps of:
- placing a first sheet of thermoplastic material (12) heated at a plasticizing temperature, between two dies (18, 38) which define at least one cavity (20),
- placing a second heated sheet of thermoplastic material (14) above the first sheet (12), and
- closing the dies (18, 38) and injecting a pressurised fluid for forming at least one cavity (16) between said sheets (12, 14),
characterised in that one of said dies (18) has at least one needle (22) connected to a source of pressurised fluid and placed in correspondence with said cavity (20) and in that after the deposition of the first sheet (12) a pressure is applied on the portion of the sheet placed in correspondence with said needle (22) so as to produce the perforation of the sheet (12) by said needle (22).

2. A method according to claim 1, characterised in that said pressure is applied by means of a perforatable plug (30).

3. A method according to claim 1, characterised in that said pressure is applied by means of a hollow element which applies a pressure on the sheet (12) in close proximity with said needle (12).

4. A method according to claim 2 or claim 3, characterised in that the element (30) whoch applies said pressure is made of a material which is not compatible with the material of which the sheet (12) is made.

5. A method according to claim 2 or 3, characterised in that said element (30) which applies said pressure is compatible with the material of which the sheet (12) is made and is replaced at each moulding cycle.

6. A method according to claim 1, characterised in that the needle (22) has a top end closed and is provided with supply holes (44) formed in its lateral wall.
